# EUROPÄISCHE PATENTSCHRIFT

(11) **EP 2 282 191 B1**
(45) Veröffentlichungstag und Bekanntmachung des Hinweises auf die Patenterteilung: **21.03.2018**
(21) Anmeldenummer: 10006964.0
(22) Anmeldetag: 06.07.2010
(51) Int. Cl.: G01N 1/06

(54) **Messerhalter für Mikrotom**
Knife holder for microtome
Support de couteau pour microtome

(30) Priorität: 05.08.2009 DE 102009036190
(43) Veröffentlichungstag der Anmeldung: 09.02.2011
(73) Patentinhaber: Microm International GmbH, 69190 Walldorf (DE)
(72) Erfinder: Fank, Reiner, 69231 Rauenberg (DE)
(74) Vertreter: Lichti - Patentanwälte Partnerschaft mbB

(56) Entgegenhaltungen:
- DE-A1-102004 051 974
- DE-U1- 29 505 648

## Beschreibung

Die Erfindung betrifft einen Messerhalter für ein Mikrotom gemäß dem Oberbegriff des Anspruchs 1.

Mikrotome dienen der Herstellung von Dünnschnitten unterschiedlichster Präparate aus der Medizin, Biologie, Materialforschung und der Qualitätskontrolle von technischen Stoffen im Dickenbereich von ca. 0,1 µm bis 100 pm. Biologische bzw. medizinische Präparate werden dabei häufig in festere Materialien (z.B. Paraffin, Kunstharz) eingebettet, um die nötige Stabilität für den Schneidvorgang zu erreichen.

Die Schnitte werden entweder als Einzelschnitte oder auch als fortlaufende Schnittserien hergestellt. Die Herstellung dieser Dünnschnitte erfolgt mit Messern unterschiedlicher Gestalt und Beschaffenheit. Bekannt sind Stahlmesser aus ausgewählten Wergzeugstählen, die in verschiedenen Schliffarten hergestellt werden. Neben diesen nachschleifbaren massiven Messern sind sogenannte Einwegklingen im Einsatz, die nach Schmalbandklingen oder Breitbandklingen unterschieden werden und nach Überschreitung ihrer Standzeit (Nutzbarkeit zum Schneiden) durch neue ersetzt werden. Außerdem sind Glasmesser und Diamantmesser für spezielle Anwendungen im Gebrauch.

Je nach Mikrotomtyp wird entweder das Messer in einem Schlitten am feststehenden Präparat entlang geführt (klassisches Schlittenmikrotom) oder das Präparat mittels dem Präparatschlitten am feststehenden Messer (Rotationsmikrotom) entlang bewegt. Dabei heißt feststehend, daß das Messer während des eigentlichen Schneidvorgangs vollständig fixiert ist. Selbstverständlich sind zwischen den Schneidvorgängen verschiedene Positionen des Messers vor der Probe einnehmbar, wie sie für die Grobpositionierung des Messers vor der Probe, die Zustellung des Messers beim Schneidvorgang, aber auch zur seitlichen Verschiebung des Messers zwecks Ausnutzung des gesamten Schneidbereichs des Messers erforderlich ist.

Bei Rotationsmikrotomen erfolgt die Einspannung des Messers üblicherweise durch Einklemmen des Messers in einem Messerhalter, wobei das Messer an einem Grundkörper des Messerhalters so angelegt wird, daß die Schneide über diesem Grundkörper herausragt, und mittels einer Andruckplatte darauf festgeklemmt wird. Dies geschieht in der Regel mit Hilfe eines einfachen Klemmhebels, der das Messer entweder fixiert oder freigibt.

Der Messerhalter liegt üblicherweise auf einem als Segmentbogen ausgebildeten Trägerelement, das der Einstellbarkeit des Schneidwinkels des Messers durch die Probe dient. Der Segementbogen liegt dabei mit seiner bogenförmigen Unterseite in einer entsprechend ausgeformten Mulde des darunter liegenden Basisträgers, der vor dem Objekthalter in einer Führung liegt und die Bewegung auf die Probe zu und von ihr weg erlaubt. Hierdurch wird die Anfahr- und Zustellbewegung des Messers ermöglicht.

Für die Einstellung des Messers in seiner seitlichen Position zur Probe, um andere Bereiche der Schneidkante zu nutzen, dient eine Führung auf dem Segmentbogen, in der der Messerhalter entsprechend seitlich zur Probe bewegt werden kann.

Um die jeweils gewählte Position des Messers für den Schneidvorgang sicherzustellen, ist eine Fixierung des Messerhalters notwendig, wie sie beispielsweise mit einer Klemmvorrichtung erreicht werden kann. Als solche dienen üblicherweise einfache Klemmhebel, die den Messerhalter in seiner Position in der Führung entweder fixieren oder freigeben.

Die eingesetzten Messerhalter erfüllen als Hauptzweck, das jeweilige Messer stabil, d.h. möglichst vibrationsfrei, einzuspannen, um einen Dünnschnitt von der erforderlichen Qualität, d.h. ohne Beschädigung oder Verzerrung des Gewebes, erzielen zu können. Wesentlich für alle verwendeten Messer ist, daß die Schneide für das betreffende Präparat und die gewählte Schnittdicke scharf genug ist, um einen sauberen Anschnitt und im weiteren Verlauf eine saubere Durchtrennung des Gewebes zu erzielen. Dies muß der Benutzer während des Schneidvorgangs kontrollieren, weshalb ein freier Blick auf die Schneidkante im Probenbereich während des Schneidvorgangs erforderlich ist. Der erzeugte Schnitt bzw. die Schnittserie legt sich nach Präparatgröße über die Schneidkante auf der Messerschneide oder auf der Andruckplatte des Messerhalters ab und muß von dort abgenommen werden. Dies erfolgt beispielsweise mit einem feinen Pinsel oder einer Pinzette.

Für den Bediener des Mikrotoms besteht deshalb bei jeder Handhabung des Geräts die Gefahr von Schnittverletzungen an der Hand. Bei Rotationsmikrotomen mit feststehendem Messer sind üblicherweise Klingenschutzvorrichtungen vorgesehen, die bei Vorbereitungsarbeiten, in Arbeitspausen oder benutzungsfreien Zeiten die Schneidkante abdecken. Dazu werden diese Schutzvorrichtungen entweder frei auf das Messer aufgesetzt, oder sie können, am Messerhalter befestigt, in die Schutzposition geschwenkt oder verschoben werden. Diese Fingerschutzvorrichtungen haben alle den Nachteil, daß sie während der Arbeitsphase keinen Schutz bieten, weil sie zur Benutzung, insbesondere zur Schnittabnahme vom Messer, wieder aus dem Schneidkantenbereich entfernt werden müssen.

Aus der DE 10 2004 051 974 A1, von der im Oberbegriff des Anspruchs 1 ausgegangen wird, ist ein Messerhalter mit einem als Bügel ausgebildeten, verschwenkbaren Klingenschutz bekannt, wobei der Bügel in der Schutzposition auf der der Probe abgewandten Seite des Messers beabstandet von der Schneidkante des Messers so angeordnet ist, daß ein Zugriff auf die Schneidkante nicht möglich ist. Dieser bügelartig verschwenkbare Klingenschutz kann sich über die gesamte Länge des Messers erstrecken und braucht zur Schnittabnahme nicht entfernt zu werden. Wenn der Zugang zum Messerhalter benötigt wird, z.B. um das Messer zu wechseln oder den Messerhalter seitlich anders zu positionieren, kann der Klingenschutz aus seiner Arbeitsposition in eine Ruheposition verschwenkt werden. Dann ist der freie Zugriff auf den Messerhalter und die Bedienung der Klemmvorrichtungen des Messerhalters möglich.

Der Nachteil dieser Vorrichtung ist, daß das Verschwenken des Klingenschutzes zusätzlich zum Bedienen des Messerhalters erforderlich ist. Gerade bei Routinearbeiten, wie sie mit einem Mikrotom ausgeführt werden, ist jeder unnötige Arbeitsgang für den Benutzer von Nachteil, weil er seinen Arbeitsfluß stört. Dies kann dazu führen, daß es der Benutzer vorzieht, den Klingenschutz gar nicht erst zu nutzen und das Mikrotom ohne Verbringung des Klingenschutzes in seine Schutzposition bedient, wodurch die Funktion des Klingenschutzes, das Verletzungsrisiko zu verringern, außer Kraft gesetzt wird. Da gerade bei Routinearbeiten häufig nur angelernte Kräfte eingesetzt werden, die die bestehende Gefahr nur unzureichend einschätzen können, ohne die dafür erforderliche Geschicklichkeit erlernt und eingeübt zu haben, gleichzeitig aber unter Zeitdruck arbeiten müssen, führt dies in besonderem Maße zur Gefährdung von entsprechendem Laborpersonal.

Aus der DE 295 05 648 U1 ist ein Mikrotom mit einem Messerhalter bekannt, der einen schwenkbaren Schutzbügel aufweist, der in einer Abdeckposition einrastet und somit gegen eine ungewollte Verstellung gesichert ist.

Es stellt sich die Aufgabe, einen Messerhalter mit einem Klingenschutz der vorgenannten Art so weiterzubilden, daß die Bedienbarkeit verbessert bzw. vereinfacht wird.

Die Aufgabe wird durch einen Messerhalter mit den Merkmalen des Anspruchs 1 gelöst. Dabei ist vorgesehen, daß der Klingenschutz in drei verschiedenen definierten Positionen positionierbar ausgebildet ist und Mittel vorgesehen sind, die je nach Position bewirken:
a) in der oberen Schutzposition eine gleichzeitige Fixierung der Position des Messerhalters in der Führung,
b) in der mittleren Messerhalter-Verschiebe-Position eine Zugriffsmöglichkeit auf den Messerhalter bei gleichzeitiger Aufhebung der Positionsfixierung des Messerhalters in der Führung,
c) in der unteren Messer-Wechsel-Position eine freie Zugriffsmöglichkeit auf den Messerhalter unter gleichzeitiger Fixierung der Position des Messerhalters in der Führung,
und daß der Klingenschutz und die Mittel derart ausgebildet sind, daß eine ergonomische Schnittabnahme nur in der Schutzposition möglich ist, und daß in der Messer-Wechsel-Position durch die vorgeschwenkte Bügelposition des Klingenschutzes der Zugriff mit der Hand bei der Schnittabnahme erschwert ist.

Dadurch daß die Positionierung des Klingenschutzes gleichzeitig auch die Fixierung des Messerhalters in seiner seitlichen Positionierung steuert, braucht der Bediener nur ein Element (den Klingenschutz) statt zweien (Klingenschutz und Klemmhebel) zu bedienen. Gleichzeitig hat diese Funktionskopplung den wesentlichen Vorteil, daß der Schneidvorgang nur unter Verschwenkung des Klingenschutzes in die Schutzposition möglich ist, da eine ergonomische Schnittabnahme nur in dieser Position erfolgen kann. In der Messer-Wechsel-Position, bei der der Messerhalter ebenfalls in seiner Führung fixiert ist, ist durch die vorgeschwenkte Bügelposition des Klingenschutzes der Zugriff mit der Hand bei der Schnittabnahme so erschwert, daß der Benutzer in dieser Stellung keine echten Schnitte anzufertigen kann. Er müßte bei jeder Schnittabnahme eine anstrengende und unbequeme Haltung mit dem Arm einnehmen und könnte die Hand nicht optimal einsetzen. Hingegen können in der Messer-Wechsel-Position durchaus Trimmschnitte ausgeführt werden, bei der grobe Schnitte am Einbettmaterial des Präparats ausgeführt werden, bis die eigentliche Probe bzw. deren zu untersuchende Schicht erreicht ist. Die hierbei erzeugten Schnittabfälle fallen entweder selbst vom Messer herunter, oder sie können ohne große Vorsicht gegenüber den Schnitten entfernt werden, so daß ein bequemer Zugriff in den Schneidkantenbereich nicht erforderlich ist.

Erst beim Anfertigen der echten Schnitte wird der Schneidvorgang unter Zustellung des Messers in der erforderlichen Schnittdicke ausgeführt und verlangt eine behutsame Abnahme der Schnitte vom Messer bzw. von der Andruckplatte, da diese äußerst empfindlich gegenüber mechanischer Belastung sind. Hierzu ist ein bequemer, d.h. ergonomisch günstiger Zugriff in den Messerbereich erforderlich. Da dem Bediener dieser in der Messer-Wechsel-Position verwehrt ist, kann der Benutzer nun nicht mehr aus Bequemlichkeit auf die Verwendung des Klingenschutzes verzichten. Eine sichere Bedienung des betreffenden Mikrotoms ist dadurch mit rein mechanischen Mitteln selbst in hektischen Arbeitssituationen gewährleistet, ohne daß der Benutzer von den Sicherheitsvorteilen überzeugt werden muß.

Für die konkrete Realisierung dieser Grundfunktionen der Erfindung gibt es verschiedene Möglichkeiten: Man könnte beispielsweise die Positionierung des Klingenschutzes durch Schwenkung von Hand herbeiführen, dann aber sensorisch erfassen und die Fixierung oder Freigabe des Messerhalters in der Führung mit beispielsweise mechanischen oder elektromagnetischen Mitteln herbeiführen.

Eine besonders vorteilhafte Ausgestaltung der Mittel sieht jedoch vor, daß die Mittel aufweisen:
a) ein Lager zur Aufnahme einer Welle im Trägerelement
b) eine Wirkverbindung zwischen dem Klingenschutz und der Welle
c) ein Klemmelement zum Fixieren des Messerhalters in der Schutzposition und der Messer-Wechsel-Position,
die so zusammenwirken, daß während der Positionierung des Klingenschutzes in der Schutzposition und der Messer-Wechsel-Position das Klemmelement die Position des Messerhalters in seiner Führung fixiert und in der Messerhalter-Verschiebe-Position des Klingenschutzes die Fixierung des Messerhalters aufgehoben ist.. Diese direkte mechanische Kopplung des Klingenschutzes mit Mitteln zur Positionsfixiervorrichtung des Messerhalters läßt sich auf einfache Weise herstellen und erlaubt eine funktionssichere sowie weitgehend verschleiß- und wartungsarme Benutzung.

In den weiteren abhängigen Ansprüchen werden vorteilhafte Ausgestaltungen des Klingenschutzes oder der Mittel beschrieben.

Eine zweckmäßige Ausgestaltung der mechanischen Mittel sieht vor, daß die Welle neben einem Lagerbereich einen Exzenterbereich mit zwei Exzenterklemmnasen aufweist, die dadurch gebildet sind, daß die Welle im Exzenterbereich in einem Teilbereich seines Umfangs eine Abflachung aufweist, wobei die Übergänge vom Umfang zur Abflachung die Exzenterklemmnasen bilden, und daß das Klemmelement einen im wesentlichen T-förmigen Kopfteil zum Eingreifen in eine entsprechend ausgebildete Nut auf der Unterseite des Messerhalters und darunter eine Bohrung zur Aufnahme der Welle und mit einem Eingriffsbereich im unteren Teil der Bohrung aufweist und das Klemmelement senkrecht zum Lager durch dieses im Exzenterbereich durchtretend so angeordnet ist, daß die Bohrung mit dem Lager im wesentlichen fluchtet und der Kopfteil aus dem Trägerelement hervorkragend in die Nut auf der Unterseite des Messerhalters eingreift, so daß bei Eingriff einer der Exzenterklemmnasen mit dem Eingriffsbereich des Klemmelements dieses nach unten bewegt wird und mittels Einwirkung des Kopfteils in der Nut des Messerhalters diesen in seiner Führung klemmfixiert, was der Schutzposition und der Messer-Wechselposition des Klingenschutzes entspricht, und daß die Positionierung der Abflachung im Eingriffsbereich der Messerhalter-Verschiebe-Position des Klingenschutzes mit Freigabe der Fixierung des Messerhalters entspricht.. Dies erlaubt die Realisierung mit geringstmöglichem Änderungsaufwand gegenüber den bisherigen Konstruktionen. Lediglich die Welle, die bei herkömmlichen Geräten vom Messerhalter-Klemmhebel zur Fixierung des Messerhalters bedient wird und der Klingenschutzbügel sind davon betroffen, so daß auf diese Weise sogar Altgeräte auf einfachste Weise umgerüstet werden können.

Eine zweckmäßige Weiterbildung ist sieht vor, daß die Welle eine Ausnehmung aufweist und ein Einrastelement so ausgestaltet und angeordnet ist, daß es bei Positionierung des Klingenschutzes in Position W in die Ausnehmung einrastet. Hierdurch kann eine sichere Positionierung des Klingenschutzes in der mittleren Messer-Verschiebe-Position erreicht werden. Der Benutzer kann das Einrasten des Einrastelements bei der Schwenkbewegung wahrnehmen und weiß daher, daß er die richtige Position eingestellt hat. Ferner bewirkt die Einrastung, daß die Einhaltung dieser Position mit leichten Kräften gestützt wird, ohne daß die weitere Verschwenkung behindert wird.

Das Einrastelement kann beispielsweise durch eine Feder mit einer in dieser Feder gelagerten Kugel gebildet sein, wobei die Kugel dann in die Ausnehmung der Welle einrastet. Die Flexibilität der Feder erlaubt eine leichtgängige Handhabung.

Ferner ist es zweckmäßig, daß die Welle eine Ringnut aufweist und ein Eingriffselement vorgesehen ist, das so ausgebildet und angeordnet ist, daß es in diese Nut eingreift und so die Welle (8) gegen ungewollte Verschiebung im Lager sichert. Dadurch wird die richtige Lage der Welle zu den anderen Wirkelementen während der Nutzung sichergestellt.

Ein mögliche Ausgestaltung sieht vor, daß die Welle aus einem ersten Teil und einem zweiten Teil besteht, und daß beide Teile der Welle über jeweils eine Wirkverbindung mit dem Klingenschutz verbunden und im Lager angeordnet sind und wobei der Exzenterbereich im ersten Teil der Welle angeordnet ist. Dies erleichtert zum einen die Fertigung des Exzenterteils, aber auch die Montage wird dadurch einfacher. Beide Wellenteile werden jeweils seitlich in das Lager geführt. Das Lager kann dabei durchgehend oder auch entsprechend der Länge der Wellenteile ausgestaltet sein.

Eine vorteilhafte Weiterbildung sieht vor, daß der Klingenschutz zur probenabgewandten Seite eine Abflachung aufweist, die derart bemessen und angeordnet ist, daß der Benutzer in der Schutzposition eine freie Sicht auf die Schneidkante des Messers hat. Dies erlaubt bei Erhaltung der Schutzfunktion eine verbesserte Sicht des Benutzers auf die Probe, die Schneidkante und die abzunehmenden Schnitte. Dabei kann die Abflachung je nach Blickwinkel angepaßt werden.

Eine weitere vorteilhafte Weiterbildung des Klingenschutzes sieht vor, daß der Klingenschutz auf der Seite der Bedienerhand eine Auskragung als Bedienhebel für die Hand des Benutzers aufweist. Hierdurch wird die Bedienung erleichtert. Die Auskragung muß so beschaffen sein, daß sie bequem mit einem oder zwei Fingern gegriffen werden und eine gute Hebelwirkung entfalten kann, insbesondere mit Daumen und Zeigefinger. Die Auskragung kann beispielsweise durch einen nach außen geführten Bogen oder eine auskragende Lasche, herstellbar z.B. durch eine Abflachung des ansonsten runden Querschnitts des Bügels bewirkt werden.

Durch die Maßnahme, daß der Klingenschutz einteilig ausgebildet ist, kann der Klingenschutz stabil gegen Verwindungskräfte bei der Bedienung ausgestaltet werden.

Eine mögliche Weiterbildung des Klingenschutzes sieht vor, daß der Klingenschutz ein im Innern des Klingenschutzbügels seitlich angeordnetes Begrenzungselement aufweist, das in der Schutzposition links und/oder rechts vom Messerhalter zu liegen kommt, so daß für die Positionierung des Messerhalters in seiner Führung während des Schneidvorgangs eine seitliche Begrenzung gesetzt ist. Hierdurch kann bei Bedarf sichergestellt werden, daß der Messerhalter nur innerhalb eines vorbestimmten Rahmens innerhalb der Führung positioniert werden kann.

Die Erfindung wird anhand der Zeichnung erläutert. Es zeigen
- **Fig. 1**: einen erfindungsgemäßem Messerhalter mit Klingenschutz in Perspektivsicht,
- **Fig. 2**: den Klingenschutz mit seinen drei Positionen in einer vereinfachten, teilweise geschnittenen Seitenansicht,
- **Fig. 3**: einen Ausschnitt zu Fig. 1 in Draufsicht geschnitten
- **Fig. 4**: als Detailansicht die erfindungsgemäße Welle in Draufsicht,
- **Fig. 5**: als Detailansicht zu Fig. 3 das Einrastelement im Schnitt,
- **Fig. 6a,6b,6c**: schematische Detailsichten der erfindungsgemäßen Welle (Exzenterbereich) im Schnitt,
- **Fig. 7a, 7b**: ein Ausführungsbeispiel für die Ausgestaltung des Klingenschutzes in Draufsicht und im Schnitt und
- **Fig. 8**: ein weiteres Ausführungsbeispiel für die Ausgestaltung des Klingenschutzes.

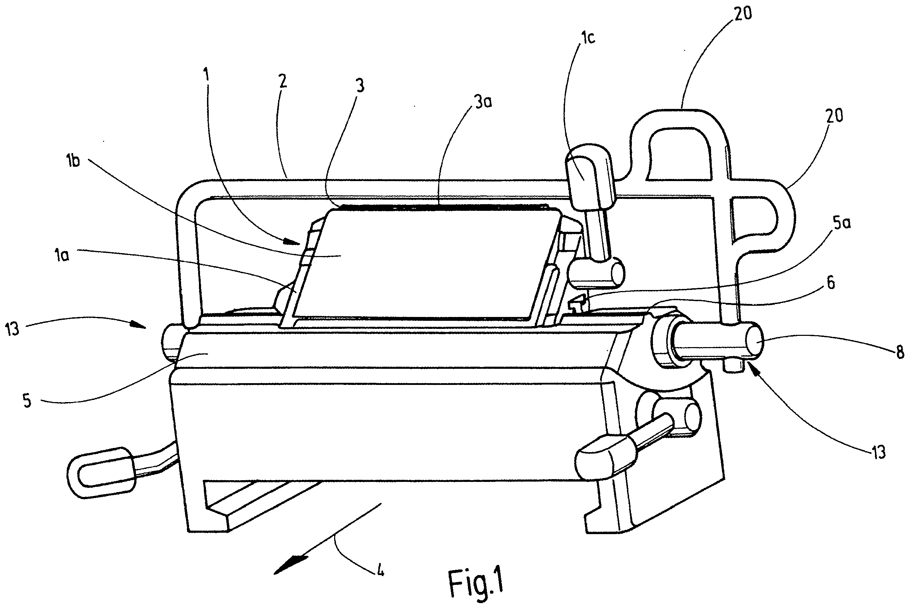

**Fig. 1** zeigt einen erfindungsgemäßen Messerhalter 1 mit dem Klingenschutz 2 auf dem als Segmentbogen ausgestalteten Trägerelement 5, das in der Mulde des Basisträgers (ohne Bezugszeichen) liegt. Ein Messer 3 ist mit Hilfe der Andruckplatte 1b und dem Klemmhebel 1c auf dem Grundkörper 1a des Messerhalters 1 eingespannt. Dabei ragt nur die Schneidkante 3a nach oben aus dem Messerhalter 1 heraus. Die Probe wird in einem Objektschlitten (nicht dargestellt) hinter dem Messer 3 entlanggeführt, d.h. die probenabgewandte Seite 4 des Messers 3 liegt auf der Betrachterseite.

Der Messerhalter 1 ist in der Führung 6 des Segmentbogens 5 derart geführt, daß eine seitliche Verstellbarkeit des Messerhalters 1 und damit eine Nutzung aller Bereiche der Schneidkante 3a des Messers 3 gegeben ist, denn die zu schneidenden Proben beanspruchen im Verhältnis zur Breite der Schneidkante 3a nur einen kleinen Teil (in der Regel im mm- bis cm-Bereich). Durch den Segmentbogen 5 verläuft eine Welle 8, die über eine Wirkverbindung 13 mit dem Klingenschutz 2 verbunden ist, so daß die Welle 8 bei einer Schwenkbewegung des Klingenschutzes 2 dieselbe Schwenkbewegung vollzieht. In der Darstellung nimmt der Klingenschutz 2 die Schutzposition S ein, d.h. der Bügel des Klingenschutzes 2 verläuft vor der Schneidkante 3a oberhalb und parallel zu dieser, so daß ein Kontakt mit der Hand bzw. den Fingern des Benutzers verhindert wird.

Der Klingenschutz 2 weist zwei Auskragungen 20 auf, die die Bedienbarkeit verbessern können. Diese Auskragungsformen sind lediglich zwei mögliche Varianten, die einzeln oder kombiniert verwendet werden können.

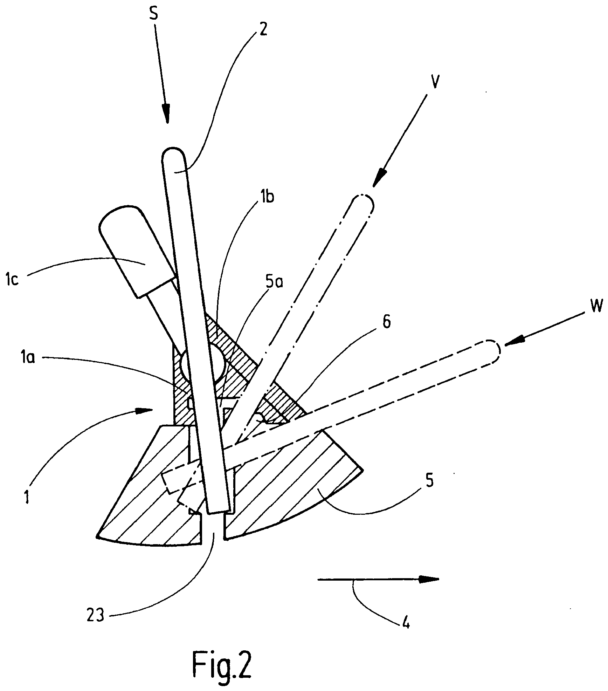

**Fig. 2** zeigt die drei einstellbaren Positionen S, V, W des Klingenschutzes 2 von der Seite gesehen. Im Schnitt erkennbar sind der Segmentbogen 5, der Messerhalter 1 mit seinem Grundkörper 1a auf der Führung 6, die Andruckplatte 1b und der Klemmhebel 1c. Ferner erkennbar ist die Bohrung 23 für das Klemmelement 14 (hier nicht dargestellt) im Segmentbogens 5 sowie der hier T-förmigen Nut 5a im Grundkörper 1a des Messerhalters 1, in den das T-förmige Kopfteil 15 des Klemmelements 14 (beides nicht dargestellt) eingreift, um bei entsprechendem Klemmeingriff den Messerhalter 1 gegen den Segmentbogen 5 zu drücken. Durch Anordnung eines Federelements (hier nicht dargestellt) unterhalb des Klemmelements 14 (ebenfalls nicht dargestellt), beispielsweise eine Feder- oder Wellscheibe, kann eine bequemere Verschiebbarkeit des Messerhalters 1 in der Klingenschutzposition V bewirkt werden. Als Auflagefläche für ein solches Federelement dient der Absatz in der Bohrung 23 unterhalb des Klemmelements 14 mit geringerem Durchmesser als im Bereich des Klemmelements 14.

In der nach oben ausgerichteten Position nimmt der Klingenschutz 2 die Schutzposition S ein, bei der ein Zugriff mit der Hand des Benutzers auf die Schneidkante 3a des Messers 3 verhindert und gleichzeitig der Messerhalter 1 zum kontrollierten Schneiden in seiner Schnittposition in der Führung 6 fixiert wird. In der vorgeschwenkten Mittelposition nimmt der Klingenschutz 2 die Messer-Verschiebe-Position V ein. Diese erlaubt einen seitlichen Zugriff auf den Messerhalter 1 und gibt die Fixierung des Messerhalters 1 frei, um diesen auf der Führung 6 seitlich verschiebbar zu machen. "Seitlich" ist hier in der Betrachtungsweise der Fig. 1 zu verstehen. In der weiter nach unten verschwenkten, dritten Position nimmt der Klingenschutz 2 die Messer-Wechsel-Position W ein, die wieder mit einer gleichzeitigen Fixierung des Messerhalters 1 in seiner Position auf der Führung 6 einhergeht. Damit ist ein sicherer Messerwechsel möglich. Möglich ist auch das Anschneiden oder auch Trimmen einer Probe, bei der es gerade nicht auf die (ergonomische) Schnittabnahme ankommt, weil die Schnitte entweder von selbst herabfallen oder ohne jegliche Vorsicht zur Vermeidung von Schnittbeschädigungen entfernt werden können, da es sich ohnehin um Abfall handelt. Ein bequemer Zugriff mit der Hand für eine sorgfältige Abnahme der empfindlichen echten Probenschnitte ist aber verhindert, weil der Bügel des Klingenschutzes der notwendigen Arm- und Handführung im Weg ist.

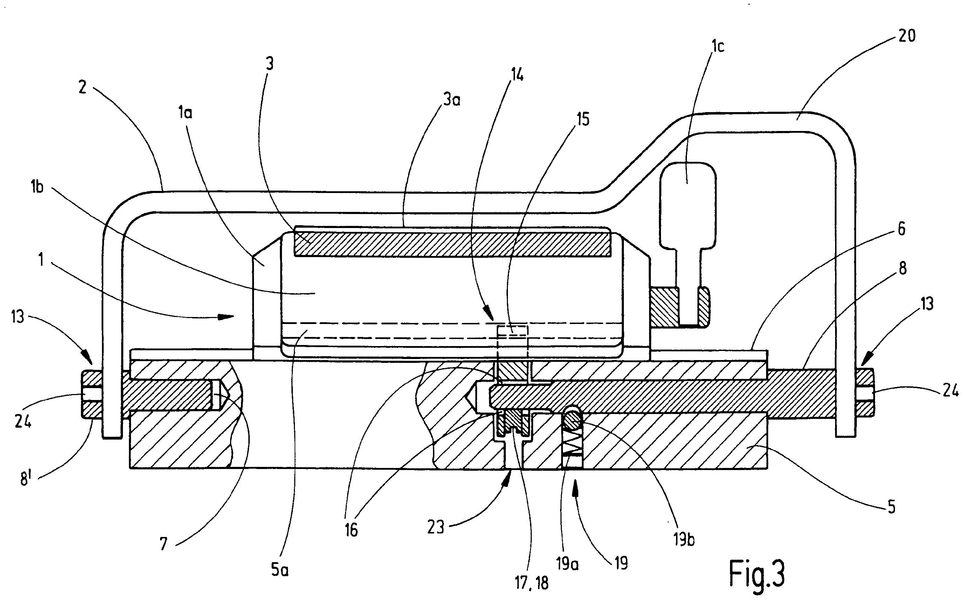

**Fig. 3** zeigt den wesentlichen Ausschnitt von Fig. 1 in Draufsicht mit den schon beschriebenen Details des Messerhalters 1 sowie weiteren Details. Erkennbar wird hier auch die Einspannung des Messers 3, bei dem der eingespannte Teil schraffiert dargestellt ist, während die gefährliche Schneidkante 3a über die Andruckplatte 1b herausragt. Der Klingenschutz 2 weist hier eine einzelne Auskragung 20 auf und ist einteilig ausgebildet, wodurch eine gute Verwindungsstabilität gewährleistet ist. Über die Wirkverbindung 13 ist der Klingenschutz 2 mit der Welle 8, 8' verbunden, die hier zweiteilig ausgestaltet ist. Dabei dient der zweite Teil der Welle 8' als Stabilisierung für den Klingenschutz 2. Selbstverständlich wäre ein Klingenschutz 2 auch mit einseitiger Wirkverbindung 13 vorstellbar, wobei die Welle 8 sowohl ein- als auch zweiteilig ausgebildet sein könnte. Die Zweiteiligkeit der Welle 8 vereinfacht jedoch die Montage der Welle 8.

Das in der Bohrung 23 des Segmentbogens 5 angeordnete Klemmelement 14 ist geschnitten dargestellt mit freigelegter Bohrung 16 und Blick auf die hindurchgeführte Welle 8 im Exzenterbereich 8b. Der Eingriffsbereich 17 ist als Einstellschraube 18, wie beispielsweise in Form einer Madenschraube mit Inbus-Sechskant-Eingriff, ausgebildet.

Als weiteres Detail ist das Einrastelement 19 als Feder 19a und federgelagerte Kugel 19b dargestellt, das in eine Ausnehmung 11 der Welle 8 eingreift. Die Ausnehmung 11 ist auf der Welle so angeordnet, daß der Eingriff in der Messer-Verschiebe-Position V erfolgt. Hierdurch spürt der Benutzer, daß er die Position eingestellt hat, was bedeutet, daß der Messerhalter 1 nun seitlich in der Führung 6 bewegbar ist. Diese Position wird auch durch die Einrastung gesichert, kann aber ohne Mühe des Benutzers verändert werden.

Es sind ferner Mittel für eine Höhenverstellbarkeit des Klingenschutzbügels 2 dargestellt. Diese bestehen in Bohrungen in der Welle 8 im Bereich der Wirkverbindung, innerhalb derer der Klingenschutz 2 frei verschiebbar ist und mittels Feststellschrauben 24 fixiert werden kann. Dies ermöglicht eine individuelle Anpassung der Blickfreiheit auf die Probe in der Schutzposition S des Klingenschutzes 2. Andere handwerkliche Ausgestaltungen dieser Mittel sind selbstverständlich möglich.

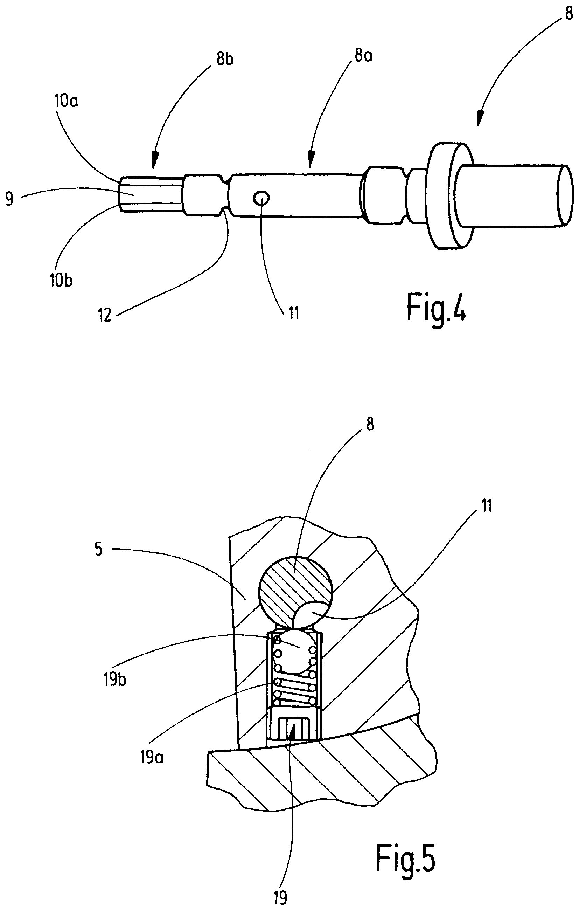

**In** **Fig. 4** wird die Welle 8 im Detail dargestellt. Die Welle 8 weist einen Lagerbereich 8a und einen Exzenterbereich 8b auf. Der Lagerbereich 8a dient der stabilen, möglichst spielfreien Auflage im Lager 7, während der Exzenterbereich 8b, hier mit einem geringeren Durchmesser als dem des Lagerbereichs 8a versehen, der Zusammenwirkung mit dem Klemmelement 14 dient. Dazu weist der Exzenterbereich 8b in einem Teil seines Umfangs eine Abflachung 9, wobei durch die Übergängen zwischen der Abflachung 9 zum Umfang der Welle die zwei Exzenterklemmnasen 10a und 10b gebildet werden. Die Ausnehmung 11 dient zum Einrasten des Einrastelements 19 bzw. mit dessen Kugel 19b, um die Positionierung des Klingenschutzes in der Position V zu erleichtern. Die Ringnut 12 dient zum Eingriff durch ein entsprechendes Eingriffselement, um neben einer allgemeinen Lagesicherung eine stabile und funktionssichere axiale Ausrichtung der Welle 8 in ihrem Lager 7 gegenüber den mit ihr zusammenwirkenden Elementen, insbesondere dem Klemmelement 14 und dem Einrastelement 19, sicherzustellen.

**Fig. 5** zeigt als Detail zu Fig. 3 das Einrastelement 19. Gut erkennbar ist die Feder 19a, gegen deren Federkraft eine Kugel 19b gelagert ist, die bei Positionierung der Ausnehmung 11 der Welle 8 über der Kugel 19b in diese einrastet. Andere Ausgestaltungen des Einrastelements ist selbstverständlich möglich. Wesentlich ist, daß es dem Benutzer das Erkennen der richtigen Positionierung des Klingenschutzes 2 leicht machen, ohne eine Weiterverschwenkung allzusehr zu behindern.

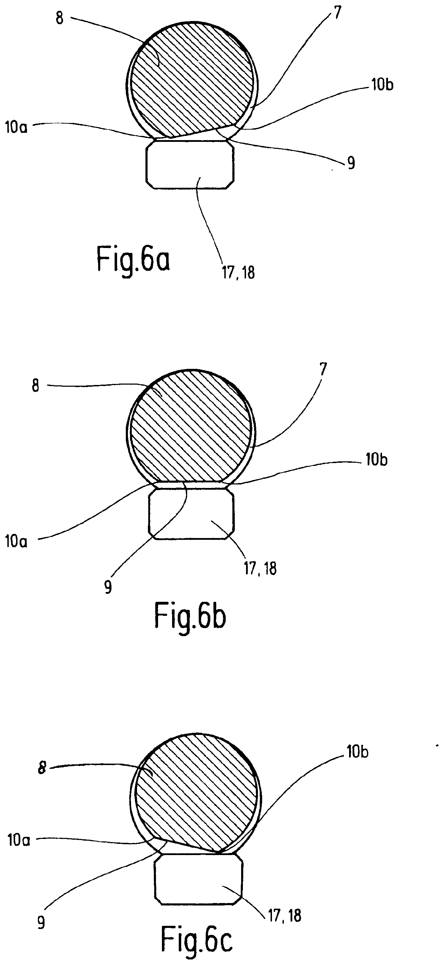

Die **Fig. 6a, 6b und 6c** zeigen als schematische Detailsichten die Welle 8 im Exzenterbereich 8b in ihrem Lager 7. Deutlich erkennbar sind die Abflachung 9 und die Exzenterklemmnasen 10a und 10b, die bei entsprechender Drehung der Welle 8 - über die Wirkverbindung 13 (hier nicht dargestellt) durch die Schwenkbewegung des Klingenschutzbügels 2 ausgelöst - mit dem Eingriffsbereich 17 des Klemmelements 14 das Klemmelement 14 mit Kraft beaufschlagen, wodurch dieses nach unten gedrückt wird. Durch die Ausbildung der Welle 8 mit zwei Exzenterklemmnasen 10a, 10b und dazwischen liegender Abflachung 9 können zwei verschiedene Positionen (S und W, siehe **Figuren 6a und 6c**) des Klingenschutzes 2 unter gleichzeitiger Fixierung des Messerhalters 1 und zusätzlich eine dritte Position des Klingenschutzes (V, siehe **Fig. 5b**) eingestellt werden, in der gerade keine Fixierung des Messerhalters 1 stattfindet. Wird der Eingriffsbereich 17, wie hier schematisch angedeutet, beispielsweise durch eine Einstellschraube 18 gebildet, kann die Stärke der Klemmwirkung frei eingestellt werden, insbesondere, wenn ein freier Zugriff auf diese Einstellschraube 18 für ein Werkzeug gegeben ist. Dies ist durch eine entsprechende Bohrung 23 im Segmentbogen 5 einfach zu bewerkstelligen.

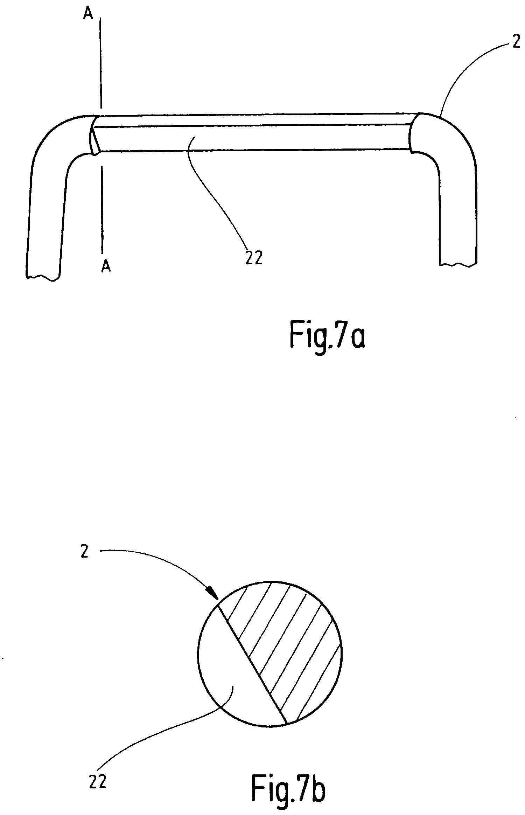

Mit den **Fig. 7a und 7b** wird eine besondere Ausgestaltung des Klingenschutzes 2 dargestellt. **Fig. 7a** zeigt, daß der Bügel des Klingenschutzes 2 mindestens in dem Bereich, in dem er in seiner Schutzposition S vor der Probe zu liegen kommen kann, eine Abflachung 22 aufweist. In Fig. 7b ist ein Schnitt der Ebene A-A dargestellt, in dem die Abflachung 22 deutlich erkennbar ist. Diese Abflachung 22 dient dazu, dem Benutzer, der üblicherweise von vorn und von oberhalb des Klingenschutzbügels 2 zur Beobachtung und Kontrolle des Schneidvorgangs auf die Schneidkante 3a und die Probe blickt, das Blickfeld zu vergrößern, weil der querverlaufende Teil des Klingenschutzes 2 in Blickrichtung auf die Schneidkante 3a, die Probe und den Ablagebereich für die Schnitte liegt. Die Position und der Winkel der Abflachung 22 zur Stellfläche des Mikrotoms, auf dem der Messerhalter 1 angeordnet ist, ist nach Einsatz zu wählen. Gut geeignete Maße sind beispielsweise eine Abflachung 22 um ca. 2 mm vom Durchmesser in einem Winkel von ca. 25° von der Stellfläche aus gemessen. Eine weitere Verbesserung des Blickfelds kann außerdem dadurch erreicht werden, daß die Entfernung des Klingenschutzes 2 von der Schneidkante 3a (hier nicht dargestellt) verstellbar eingerichtet ist (siehe Fig. 3). Dies kann beispielsweise durch entsprechende Mittel in der Wirkverbindung 13 zwischen Klingenschutz 2 und Welle 8 erreicht werden. Andere handwerkliche Ausgestaltungen sind selbstverständlich denkbar, z.B. auch durch entsprechend angeordnete Schub-/Zugverbindungen im Klingenschutz 2.

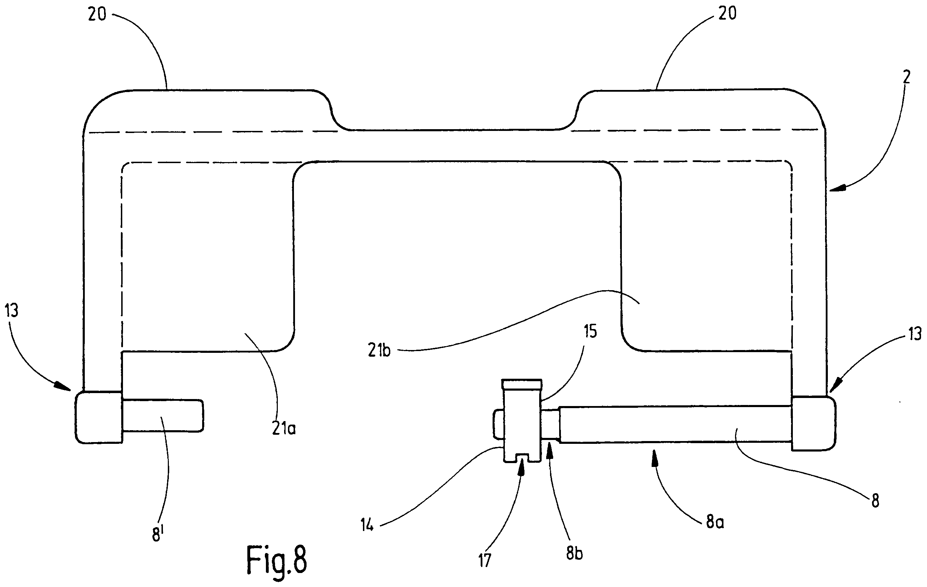

**Fig. 8** zeigt neben den schon bekannten Details der Welle 8 mit Lagerbereich 8a und Exzenterbereich 8b sowie dem vereinfacht dargestellten Klemmelement 14 mit Kopfteil 15 und Eingriffsbereich 17 eine weitere Variante eines Klingenschutzes 2. Dieser weist flächige Auskragungen 20 und seitliche Begrenzungselemente 21a, 21b auf. Selbstverständlich kann ein solches Begrenzungselement 21a bzw. 21b auch nur einseitig vorgesehen sein. In jedem Fall muß die Bemessung des Begrenzungselement 21a bzw. 21b den spezifischen Erfordernissen angepaßt sein. Ein solches Erfordernis könnte sein, daß ein Messerhalter 1 bestimmte Positionen nicht einnehmen soll. Denkbar wäre, ein solches Begrenzungselement 21a, 21b so auszugestalten, daß es auf dem Klingenschutz 2 frei verschieb- bzw. positionierbar wäre. Dadurch könnte beispielsweise sichergestellt werden, daß bestimmte (schon benutzte und daher nicht mehr brauchbare) Teile der Schneidkante 3a nicht mehr zum Einsatz kommen.

Sämtliche Darstellungen dienen lediglich der Verdeutlichung des beanspruchten Erfindungsgedankens anhand beispielhafter Ausgestaltungsmöglichkeiten. Weitere Ausgestaltungen sind selbstverständlich möglich, insbesondere, was die Art der Kopplung der Positionierung des Klingenschutzes 2 mit der Fixierung des Messerhalters 1 anbelangt.

Mechanische Mittel erlauben eine sehr funktionssichere Nutzung und vor allem die Umgestaltung gängiger Mikrotome mit einfachsten Mitteln. Für neue Geräte sind aber auch andere Kopplungen denkbar, die die Stellung des Klingenschutzes 2 beispielsweise elektronisch erfassen und die Fixierung des Messerhalters 1 beispielsweise wiederum elektronisch steuern. Aber auch mechanische Steuerungen sind denkbar. Diese wären aber der direkten Kopplung, wie in Anspruch 2 beschrieben, unterlegen. Die Fixierung des Messerhalters 1 selbst kann entweder wiederum mit mechanischen Mitteln, wie Klemmfixierung, Einrasten, etc. bewirkt werden, oder praktischerweise auch mit Hilfe eines Elektromagneten, der unterhalb des Messerhalters im Segementbogen bzw. im Trägerelement 5 des Messerhalters 1 angeordnet ist und zur Fixierung mit Strom beaufschlagt wird. Aber auch andere Ausgestaltungen des Klingenschutzes 2, insbesondere der Auskragungen 20, sind denkbar. Eine mögliche und genauso wirksame Ausgestaltung, wie die in Anspruch 8 beschriebene Abflachung 22, wäre durch Verwendung eines durchsichtigen Materials für zumindest den Teil des Klingenschutzes 2, der im Bereich des Messerhalters 1 zu liegen kommt. Dieses Material müßte so beschaffen sein, daß eine ausreichend klare Sicht auf Probe und Schneidkante 3a gewährleistet ist.

### Bezugszeichenliste

- 1: Messerhalter
- 1a: Grundkörper
- 1b: Andruckplatte
- 1c: Klemmhebel
- 2: Klingenschutz
- 3: Messer
- 3a: Schneidkante
- 4: Pfeilrichtung: die der Probe abgewandte Seite (des Messers)
- 5: Trägerelement (z.B. Segmentbogen)
- 5a: Nut (z.B. T-Nut)
- 6: Führung
- 7: Lager
- 8, 8': Welle
- 8a: Lagerbereich
- 8b: Exzenterbereich
- 9: Abflachung
- 10a, 10b: Exzenterklemmnasen
- 11: Ausnehmung
- 12: Ringnut
- 13: Wirkverbindung
- 14: Klemmelement
- 15: Kopfteil
- 16: Bohrung
- 17: Eingriffsbereich
- 18: Einstellschraube
- 19: Einrastelement
- 19a: Feder
- 19b: Kugel
- 20: Auskragung
- 21a, 21b: Begrenzungselement
- 22: Abflachung
- 23: Bohrung
- 24: Feststellschrauben
- S: Schutzposition
- V: Messerhalter-Verschiebe-Position
- W: Messer-Wechsel-Position

## Patentansprüche

1. Messerhalter (1) für ein Mikrotom mit einem als verschwenkbarem Bügel ausgebildeten Klingenschutz (2), wobei der Klingenschutz (2)in einer Schutzposition (S) auf der der Probe abgewandten Seite (4) des Messers (3) derart von der Schneidkante (3a) des Messers (3) beabstandet angeordnet ist, dass ein Zugriff auf die Schneidkante (3a) nicht möglich ist, und wobei der Messerhalter (1) in einer Führung (6) auf einem Trägerelement (5) seitlich verschiebbar und fixierbar gelagert ist, um verschiedene Bereiche der Schneidkante (3a) beim Schneidvorgang zum Einsatz zu bringen, **dadurch gekennzeichnet, dass** der Klingenschutz (2) in drei verschiedenen definierten Positionen (S, V, W) positionierbar ausgebildet ist und Mittel (5, 7, 8, 8b, 13, 14, 17, 18) vorgesehen sind, die je nach Position (S, V, W) bewirken:
a) in der oberen Schutzposition (S) eine gleichzeitige Fixierung der Position des Messerhalters (1) in der Führung (6),
b) in der mittleren Messerhalter-Verschiebe-Position (V) eine Zugriffsmöglichkeit auf den Messerhalter (1) bei gleichzeitiger Aufhebung der Positionsfixierung des Messerhalters (1) in der Führung (6),
c) in der unteren Messer-Wechsel-Position (W) eine freie Zugriffsmöglichkeit auf den Messerhalter (1) unter gleichzeitiger Fixierung der Position des Messerhalters (1) in der Führung (6),
und dass der Klingenschutz (2) und die Mittel derart ausgebildet sind, dass eine ergonomische Schnittabnahme nur in der Schutzposition (S) möglich ist, und dass in der Messer-Wechsel-Position durch die vorgeschwenkte Bügelposition des Klingenschutzes der Zugriff mit der Hand bei der Schnittabnahme erschwert ist.

2. Messerhalter (1) nach Anspruch 1, **dadurch gekennzeichnet, dass** die Mittel aufweisen:
a) ein Lager (7) zur Aufnahme einer Welle (8) im Trägerelement (5)
b) eine Wirkverbindung (13) zwischen dem Klingenschutz (2) und der Welle (8)
c) ein Klemmelement (14) zum Fixieren des Messerhalters (1) in den Positionen S und W,
die so zusammenwirken, dass während der Positionierung des Klingenschutzes (2) in den Positionen S und W das Klemmelement (14) die Position des Messerhalters (1) in seiner Führung (6) fixiert und in der Position V des Klingenschutzes (2) die Fixierung des Messerhalters (1) aufgehoben ist.

3. Messerhalter (1) nach Anspruch 2, **dadurch gekennzeichnet, dass** die Welle (8) neben einem Lagerbereich (8a) einen Exzenterbereich (8b) mit zwei Exzenterklemmnasen (10a, 10b) aufweist, die dadurch gebildet sind, dass die Welle (8) im Exzenterbereich (8b) in einem Teilbereich seines Umfangs eine Abflachung (9) aufweist, wobei die Übergänge vom Umfang zur Abflachung (9) die Exzenterklemmnasen (10a, 10b) bilden,
und dass das Klemmelement (14) einen im wesentlichen T-förmigen Kopfteil (15) zum Eingreifen in eine entsprechend ausgebildete Nut (15a) auf der Unterseite des Messerhalters (1) und darunter eine Bohrung (16) zur Aufnahme der Welle (8) und mit einem Eingriffsbereich (17) im unteren Teil der Bohrung (16) aufweist und das Klemmelement (14) senkrecht zum Lager (7) durch dieses im Exzenterbereich (8b) durchtretend so angeordnet ist, dass die Bohrung (16) mit dem Lager (7) im wesentlichen fluchtet und der Kopfteil (15) aus dem Trägerelement (5) hervorkragend in die Nut (15a) auf der Unterseite des Messerhalters (1) eingreift, so dass bei Eingriff einer der Exzenterklemmnasen (10a, 10b) mit dem Eingriffsbereich (17) des Klemmelements (14) dieses nach unten bewegt wird und mittels Einwirkung des Kopfteils (15) in der Nut des Messerhalters (1) diesen in seiner Führung (6) klemmfixiert, was den Positionen S und W des Klingenschutzes (2) entspricht,
und dass die Positionierung der Abflachung (9) im Eingriffsbereich (17) der Position V des Klingenschutzes (2) mit Freigabe der Fixierung des Messerhalters (1) entspricht.

4. Messerhalter (1) nach Anspruch 2 oder 3, **dadurch gekennzeichnet, dass** die Welle (8) eine Ausnehmung (11) aufweist und ein Einrastelement (19) so ausgestaltet und angeordnet ist, dass es bei Positionierung des Klingenschutzes (2) in Position W in die Ausnehmung (11) einrastet.

5. Messerhalter (1) nach Anspruch 4, **dadurch gekennzeichnet, dass** das Einrastelement (19) eine Feder (19a) und eine in dieser Feder (19a) gelagerte Kugel (19b) aufweist.

6. Messerhalter (1) nach einem oder mehreren der Ansprüche 2 bis 5, **dadurch gekennzeichnet, dass** die Welle (8) eine Ringnut (12) aufweist und ein Eingriffselement vorgesehen ist, das so ausgebildet und angeordnet ist, dass es in diese Nut eingreift und so die Welle (8) gegen ungewollte Verschiebung im Lager (7) sichert.

7. Messerhalter (1) nach einem oder mehreren der Ansprüche 2 bis 6, **dadurch gekennzeichnet, dass** die Welle (8) aus einem ersten Teil (8) und einem zweiten Teil (8') besteht, und dass beide Teile der Welle (8, 8') über jeweils eine Wirkverbindung (13) mit dem Klingenschutz (2) verbunden und im Lager (7) angeordnet sind, wobei der Exzenterbereich (8b) im ersten Teil der Welle (8) angeordnet ist.

8. Messerhalter (1) nach einem oder mehreren der Ansprüche 1 bis 7, **dadurch gekennzeichnet, dass** der Klingenschutz (2) zur probenabgewandten Seite (4) eine Abflachung (22) aufweist, die derart bemessen und angeordnet ist, dass der Benutzer in der Schutzposition (S) eine freie Sicht auf die Schneidkante (3a) des Messers (3) hat.

9. Messerhalter (1) nach einem oder mehreren der Ansprüche 1 bis 8, **dadurch gekennzeichnet, dass** der Klingenschutz (2) auf der Seite der Bedienerhand eine Auskragung (20) als Bedienhebel für die Hand des Benutzers aufweist.

10. Messerhalter (1) nach einem oder mehreren der Ansprüche 1 bis 9, **dadurch gekennzeichnet, dass** der Klingenschutz (2) einteilig ausgebildet ist.

11. Messerhalter (1) nach einem oder mehren der Ansprüche 1 bis 10, **dadurch gekennzeichnet, dass** der Klingenschutz (2) ein im Innern des Klingenschutzbügels seitlich angeordnetes Begrenzungselement (21a, 21b) aufweist, das in der Schutzposition (S) links und/oder rechts vom Messerhalter (1) zu liegen kommt, so dass für die Positionierung des Messerhalters (1) in seiner Führung (6) während des Schneidvorgangs eine seitliche Begrenzung gesetzt ist.

## Claims

1. Knife holder (1) for a microtome having a blade guard (2) designed in the form of a pivotable bracket, wherein, in a safeguarding position (S), the blade guard (2) is spaced apart from the cutting edge (3a) of the knife (3), on the side (4) of the knife (3) directed away from the sample, such that access to the cutting edge (3a) is not possible, and wherein the knife holder (1) is mounted such that it can be displaced laterally, and fixed, in a guide (6) on a carrier element (5), in order for use to be made of different regions of the cutting edge (3a) during the cutting operation, **characterized in that** the blade guard (2) is designed to be positioned in three different defined positions (S, V, W), and means (5, 7, 8, 8b, 13, 14, 17, 18) are provided and, depending on the position (S, V, W), achieve the following results:
a) in the upper, safeguarding position (S), the knife holder (1) is simultaneously fixed in position in the guide (6),
b) in the central, knife-holder-displacement position (V), access to the knife holder (1) is made possible and, at the same time, the positional fixing of the knife holder (1) in the guide (6) is disengaged,
c) in the lower, knife-changeover position (W), free access to the knife holder (1) is made possible, the knife holder (1) being simultaneously fixed in position in the guide (6),
and **in that** the blade guard (2) and the means are designed such that ergonomic removal of sections is possible only in the safeguarding position (S), and **in that**, in the knife-changeover position, the pivoted-forward bracket position of the blade guard makes it difficult to achieve access by hand for removal of sections.

2. Knife holder (1) according to Claim 1, **characterized in that** the means have the following:
a) a bearing (7) for accommodating a shaft (8) in the carrier element (5),
b) an operative connection (13) between the blade guard (2) and the shaft (8), and
c) a clamping element (14) for fixing the knife holder (1) in the positions S and W,
and these interact such that, when the blade guard (2) is positioned in the positions S and W, the clamping element (14) fixes the position of the knife holder (1) in its guide (6) and, in the position V of the blade guard (2), the fixing of the knife holder (1) is disengaged.

3. Knife holder (1) according to Claim 2, **characterized in that**, along a bearing region (8a), the shaft (8) has an eccentric region (8b) with two eccentric clamping noses (10a, 10b), which are formed by the shaft (8) having a flattened portion (9) over part of its circumference in the eccentric region (8b), wherein the transitions from the circumference to the flattened portion (9) form the eccentric clamping noses (10a, 10b),
and **in that** the clamping element (14) has an essentially T-shaped head part (15) for engagement in a correspondingly shaped groove (15a) on the underside of the knife holder (1) and, beneath the same, has a bore (16) for accommodating the shaft (8), and an engagement region (17) in the lower part of the bore (16), and the clamping element (14) is arranged perpendicularly to the bearing (7) and passes through the latter in the eccentric region (8b) such that the bore (16) is essentially aligned with the bearing (7) and the head part (15), projecting out of the carrier element (5), engages in the groove (15a) on the underside of the knife holder (1), and therefore, when one of the eccentric clamping noses (10a, 10b) engages with the engagement region (17) of the clamping element (14), the latter is moved downwards and, by means of the head part (15) acting in the groove of the knife holder (1), clamp-fixes the latter in its guide (6), which corresponds to the positions S and W of the blade guard (2),
and **in that** the positioning of the flattened portion (9) in the engagement region (17) corresponds to the position V of the blade guard (2), with the fixing of the knife holder (1) being released.

4. Knife holder (1) according to Claim 2 or 3, **characterized in that** the shaft (8) has a recess (11) and a latching element (19) is configured and arranged such that it latches into the recess (11) when the blade guard (2) is positioned in position W.

5. Knife holder (1) according to Claim 4, **characterized in that** the latching element (19) has a spring (19a) and a ball (19b), which is mounted in said spring (19a).

6. Knife holder (1) according to one or more of Claims 2 to 5, **characterized in that** the shaft (8) has an annular groove (12) and an engagement element is provided, the engagement element being designed and arranged such that it engages in said groove and thus secures the shaft (8) against undesirable displacement in the bearing (7).

7. Knife holder (1) according to one or more of Claims 2 to 6, **characterized in that** the shaft (8) comprises a first part (8) and a second part (8'), and **in that** the two parts of the shaft (8, 8') are arranged in the bearing (7) and connected to the blade guard (2) via a respective operative connection (13), wherein the eccentric region (8b) is arranged in the first part of the shaft (8).

8. Knife holder (1) according to one or more of Claims 1 to 7, **characterized in that**, towards the side (4) directed away from the sample, the blade guard (2) has a flattened portion (22), which is dimensioned and arranged such that, in the safeguarding position (S), the user has a clear view of the cutting edge (3a) of the knife (3).

9. Knife holder (1) according to one or more of Claims 1 to 8, **characterized in that**, on the side directed toward the operator's hand, the blade guard (2) has a projection (20) in the form of an operating lever for the user's hand.

10. Knife holder (1) according to one or more of Claims 1 to 9, **characterized in that** the blade guard (2) is formed in one piece.

11. Knife holder (1) according to one or more of Claims 1 to 10, **characterized in that** the blade guard (2) has a boundary element (21a, 21b), which is arranged laterally in the interior of the blade-guard bracket and, in the safeguarding position (S), ends up located to the left and/or right of the knife holder (1), a lateral boundary therefore being provided for positioning the knife holder (1) in its guide (6) during the cutting operation.

## Revendications

1. Support de couteau (1) pour un microtome avec un protège-lame (2) réalisé sous la forme d'un étrier pouvant pivoter, le protège-lame (2) étant disposé à une certaine distance de l'arête tranchante (3a) du couteau (3), dans une position de protection (S), sur le côté (4) du couteau (3) opposé à l'échantillon, de telle sorte qu'un accès à l'arête tranchante (3a) ne soit pas possible, et le support de couteau (1) étant disposé de façon à pouvoir coulisser en côté dans un guide (6) sur un élément de support (5) et à pouvoir être fixé, pour utiliser différentes zones de l'arête tranchante (3a) lors de l'opération de coupe, **caractérisé en ce que** le protège-lame (2) est réalisé de façon à pouvoir être positionné dans trois positions définies (S, V, W) différentes et des moyens (5, 7, 8, 8b, 13, 14, 17, 18) étant prévus, ces moyens provoquant respectivement, en fonction de la position (S, V, W) :
a) dans la position de protection (S) supérieure, une fixation simultanée de la position du support de couteau (1) dans le guide (6) ;
b) dans la position de coulissement du support de couteau (V) médiane, une possibilité d'accès au support de couteau (1) en même temps que la fixation de position du support de couteau (1) dans le guide (6) est supprimée ;
c) dans la position de changement de couteau (W) inférieure, une possibilité d'accès libre au support de couteau (1) avec fixation simultanée de la position du support de couteau (1) dans le guide (6) ;
et que le protège-lame (2) et les moyens sont réalisés de telle sorte qu'un retrait de coupe ergonomique n'est possible que dans la position de protection (S) et que dans la position de changement de couteau, l'accès avec la main lors du retrait de coupe est compliqué par la position d'étrier pré-pivoté du protège-lame.

2. Support de couteau (1) selon la revendication 1, **caractérisé en ce que** les moyens comportent :
a) un palier (7) pour loger un arbre (8) dans l'élément de support (5) ;
b) une liaison active (13) entre le protège-lame (2) et l'arbre (8) ;
c) un élément de serrage (14) pour fixer le support de couteau (1) dans les positions S et W;
ces moyens interagissant de telle sorte entre eux que pendant le positionnement du protège-lame (2) dans les positions S et W, l'élément de serrage (14) fixe la position du support de couteau (1) dans son guide (6) et que la fixation du support de couteau (1) est supprimée dans la position V du protège-lame (2).

3. Support de couteau (1) selon la revendication 2, **caractérisé en ce que** l'arbre (8) comporte dans une zone de palier (8a) une zone d'excentre (8b) avec deux becs d'excentre (10a, 10b) formés de telle sorte que l'arbre (8) comporte dans la zone d'excentre (8b), dans une zone partielle de sa périphérie, un méplat (9), les transitions de la périphérie au méplat (9) formant les becs d'excentre (10a, 10b) ;
et que l'élément de serrage (14) comporte une partie de tête (15) pour l'essentiel en forme de T à engrener dans une rainure (15a) réalisée de façon correspondante sur le côté inférieur du support de couteau (1) et en dessous d'un alésage (16) pour loger l'arbre (8) et avec une zone d'engrènement (17) dans la partie inférieure de l'alésage (16) et l'élément de serrage (14) étant disposé perpendiculairement au palier (7), le traversant dans la zone d'excentre (8b), de telle sorte que l'alésage (16) s'aligne pour l'essentiel avec le palier (7) et que la partie de tête (15) composée de l'élément de support (5) s'engrène de façon saillante dans la rainure (15a) sur le côté inférieur du support de couteau (1), de sorte qu'en cas d'engrènement d'un des becs d'excentre (10a, 10b) avec la zone d'engrènement (17) de l'élément de serrage (14), celui-ci soit déplacé vers le bas et le fixe de façon serrée dans la rainure du support de couteau (1) dans son guide (6) par action de la partie de tête (15), ce qui correspond aux positions S et W du protège-lame (2) ;
et que le positionnement du méplat (9) dans la zone d'engrènement (17) de la position V du protège-lame (2) corresponde au déclenchement de la fixation du support de couteau (1).

4. Support de couteau (1) selon la revendication 2 ou 3, **caractérisé en ce que** l'arbre (8) comporte un évidement (11) et qu'un élément d'encliquetage (19) est configuré et disposé de telle sorte qu'il peut s'encliqueter dans l'évidement (11) lors du positionnement du protège-lame (2) dans la position W.

5. Support de couteau (1) selon la revendication 4, **caractérisé en ce que** l'élément d'encliquetage (19) comporte un ressort (19a) et une sphère (19b) disposée dans ce ressort (19a).

6. Support de couteau (1) selon l'une quelconque des revendications 2 à 5 ou plusieurs d'entre elles, **caractérisé en ce que** l'arbre (8) comporte une rainure annulaire (12) et qu'un élément d'engrènement est prévu, cet élément étant réalisé et disposé de telle sorte qu'il s'engrène dans cette rainure et empêche l'arbre (8) de coulisser de façon non désirée dans le palier (7).

7. Support de couteau (1) selon l'une quelconque des revendications 2 à 6 ou plusieurs d'entre elles, **caractérisé en ce que** l'arbre (8) se compose d'une première partie (8) et d'une deuxième partie (8') et que les deux parties de l'arbre (8, 8') sont reliées au protège-lame (2) respectivement via une liaison active (13) et sont disposées dans le palier (7), la zone d'excentre (8b) étant disposée dans une première partie de l'arbre (8).

8. Support de couteau (1) selon l'une quelconque des revendications 1 à 7 ou plusieurs d'entre elles, **caractérisé en ce que** le protège-lame (2) comporte en direction du côté opposé à l'échantillon (4) un méplat (22) dimensionné et disposé de telle sorte que l'utilisateur a dans la position de protection (S) la vue libre sur l'arête tranchante (3a) du couteau (3).

9. Support de couteau (1) selon l'une quelconque des revendications 1 à 8 ou plusieurs d'entre elles, **caractérisé en ce que** le protège-lame (2) comporte sur le côté de la main de l'utilisateur un surplomb (20) prenant la forme du levier de commande pour la main de l'utilisateur.

10. Support de couteau (1) selon l'une quelconque des revendications 1 à 9 ou plusieurs d'entre elles, **caractérisé en ce que** le protège-lame (2) est réalisé d'un seul tenant.

11. Support de couteau (1) selon l'une quelconque des revendications 1 à 10 ou plusieurs d'entre elles, **caractérisé en ce que** le protège-lame (2) comporte un élément limitant (21a, 21b) disposé en côté à l'intérieur de l'étrier du protège-lame reposant, dans la position de protection (S), à gauche et/ou à droite du support de couteau (1), de façon à mettre en place une limitation latérale pour le positionnement du support de couteau (1) dans son guide (6) pendant l'opération de coupe.
